# EUROPEAN PATENT APPLICATION

(11) **EP 1 673 969 A1**
(43) Date of publication of application: **28.06.2006**
(21) Application number: 04425954.7
(22) Date of filing: 27.12.2004
(51) Int. Cl.: A01B 33/06

(54) **Harrow with a double series of vertical blades**

(71) Applicant: Maschio, Antonio, 35011 Campodarsego (PD) (IT)
(72) Inventor: Maschio, Antonio, 35011 Campodarsego (PD) (IT)
(74) Representative: Vinci, Marcello

(57) **Abstract**

The invention is a new harrow with rotating vertical blades, comprising a structure (S) supporting a row of discs (D1) aligned perpendicularly to the direction of movement, each having two vertical blades (L1), connected to each other by gear wheels (R1), and having a second row of discs (D2), equipped with respective blades (L2), preferably higher, and connected by corresponding gear wheels (R2), said second row of discs being positioned parallel to said first row of discs (D1). The gear wheels (R1) and the discs (D1) in the first row receive motion from a gearcase connected to the power take-off of the agricultural machine, while the gear wheels (R2) and the discs (D2) in the second row receive motion from a gearcase connected mechanically, with a joint or other equivalent mechanism, to the gearcase of the first row. Each pair of blades (L1, L2) of each disc (D1, D2) turns in the direction opposite to the direction of rotation of the adjacent blades (L1, L2). Each disc is offset by a quarter of a turn with respect to the adjacent discs (D1, D2).

## Description

The present patent concerns machines for working the soil and refers in particular to mechanical tools that can be fitted on agricultural machines, such as tractors, for working the soil before sowing.

Various mechanical tools are known that can be fitted on agricultural machines for breaking sods and tilling the soil prior to sowing.

At present, harrows with rotating blades are increasingly more common than harrows with fixed points.

Harrows with rotating blades comprise a series of blades fitted vertically in pairs on horizontal discs or gear wheels rotating around a vertical axis. Said discs or gear wheels are mechanically connected to one another so as to transmit motion to all the blades.

The agricultural machine advances along the soil to be tilled with the harrow with rotating blades in operation; consequently, the blades perform a combined rotation and travel movement with respect to the surface being worked.

The soil must be tilled to an adequate depth and consequently the length of the harrow blades must be suitable for this purpose. This involves the need for a considerable quantity of energy and power to overcome the resistance of the layer of soil to be tilled, as well as rapid wear of the harrow blades.

Moreover, this movement of the blades does not till the soil completely, in fact several portions are left whole.

Therefore, it is often necessary to make a second harrowing passage, to prepare the soil suitably for sowing.

A second harrowing passage on the soil involves spending further time and fuel.

The second passage of the agricultural machine on soil which has already been tilled means that the wheels of the agricultural machine itself compact the soil, decreasing the effectiveness of both harrowing operations.

It is to be considered that the harrow blades wear out increasingly with each passage and consequently the second harrowing passage further shortens the life of the harrow blades.

To overcome the drawbacks described above, a new harrow with a double series of vertical blades has been studied and implemented.

The aim of the new harrow is to obtain better tilling of the soil.

Another aim of the new harrow is to obtain better tilling with only one passage on the soil.

Another aim of the new harrow is to obtain better tilling of the soil while spending less energy and power.

A further aim of the new harrow is to decrease the wear of the blades.

These and other aims, both direct and complementary, are achieved through the implementation of the new harrow with a double series of vertical blades, comprising two parallel and successive rows, with respect to the advance of the vehicle, of discs or gear wheels, so as to have two rows of blades for breaking up the soil.

The discs or gear wheels of each row are mechanically connected to one another, so as to transmit the rotary motion in such a way that the blades in the same row do not interfere with one another, while the two rows of discs or gear wheels are mechanically connected to each other, by means of a coupling or cardan shaft, so that the movement of the blades is transmitted to both rows.

The blades in the first row are preferably shorter than the blades in the second row, so that the front blades break up the surface layer and the medium depth layer of soil, while the rear wheels break up the deep layer of soil, encountering less resistance from the already broken surface layer.

Consequently, the connection to the power take-off of the agricultural machine causes the rotation of the blades in both rows.

The characteristics of the new harrow with a double series of vertical blades will be highlighted in greater detail in the following description, with reference to the drawings enclosed purely as an example without limitation.

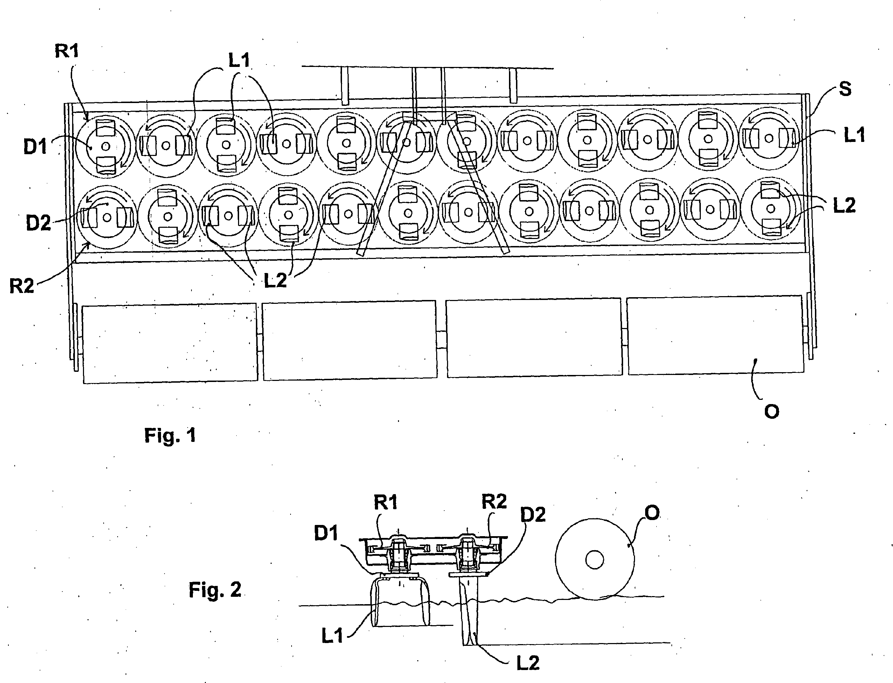

Figure 1 shows a schematic plan view of the new harrow, in which it is possible to observe a supporting and connecting structure (S) on which there are two parallel rows (F1, F2) of discs (D1, D2) with gear wheels (R1, R2), each supporting the harrowing blades (L1, L2).

Figure 2 shows a side vertical cross section of the new harrow.

The structure (S) is constituted by metal elements, plates and/or uprights, suited to support and join all the various parts of the new harrow.

Said structure is provided with two parallel rows of discs (D1, D2) axially connected with corresponding gear wheels (R1, R2). Two vertical harrowing blades (L1, L2) are fixed to each disc (D1, D2), while the gear wheels (R1, R2) transmit motion between the various discs (D1, D2) in the same row.

The two rows of discs (D1, D2) and gear wheels (R1, R2) are arranged perpendicular to the advance direction.

The discs (D1, D2) and the gear wheels (R1, R2) in each row are arranged and connected to one another so that the blades (L1, L2) of each disc (D1, D2) do not interfere with the blades (L1, L2) of the adjacent discs (D1, D2). In particular, each disc (D1, D2) is connected to the other discs (D1, D2) in such a way that its blades (L1, L2) turn in the direction opposite to the direction of rotation of the adjacent blades (L1, L2) and in such a way that each disc (D1, D2) is offset by a quarter of a turn with respect to the adjacent discs.

The blades (L1) in the first row are shorter than the blades (L2) in the second row.

A mechanical connection, not shown in the figure, transmits motion from the power take-off of the agricultural machine to the gearcase of the first row of gear wheels (R1, R2). Likewise a joint or a similar mechanism transmits motion from the gearcase of the first row to the gearcase of the second row.

It is possible for the mechanism that transmits motion between the two gearcases, or for the gearcases themselves, to be shaped or set in such a way that the rotation speed of the blades (L1) in the first row is different, that is, faster or slower, than the rotation speed of the blades (L2) in the second row.

It is possible for the new harrow to be equipped with a levelling roller (O) behind and parallel to said two rows of blades (L1, L2).

The new harrow with a double series of vertical blades constituted as described above offers considerable advantages.

The combined and simultaneous action of the two rows of blades (L1, L2) allows the soil to be tilled more effectively.

The combined and simultaneous action of the two rows of blades (L1, L2) allows the soil to be tilled more effectively with only one passage of the agricultural machine.

The combined and simultaneous action of the two rows of blades (L1, L2) allows better tilling to be achieved while spending less energy and power. In fact the blades (L1) in the first row, which are shorter, perform a first harrowing of the surface layer and of the medium depth layer of soil, while the second row of blades (L2), encountering the already tilled surface layer of soil, performs deep harrowing with less effort and using less power.

The lower resistance encountered by the blades (L1, L2) of different height means that less power is required by each row of blades (L1, L2), that is, that less total power is required by the harrow.

The lower resistance encountered by the blades (L1, L2) of different height also means less wear of the blades (L1, L2) themselves.

Therefore, with reference to the above description and to the enclosed drawings, the following claims are expressed.

## Claims

1. Harrow with rotating vertical blades, comprising a structure (S) supporting a row of discs (D1) aligned perpendicularly to the direction of movement, each having two vertical blades (L1), connected to each other by gear wheels (R1), **characterised in that** it is equipped with a second row of discs (D2) with respective blades (L2) and connected by corresponding gear wheels (R2), positioned parallel to said first row of discs (D1).

2. Harrow with two rows of vertical blades (L1, L2) according to claim 1, **characterised in that** the gear wheels (R1) and the discs (D1) in the first row receive motion from a gearcase connected to the power take-off of the agricultural machine, and wherein the gear wheels (R2) and the discs (D2) in the second row receive motion from a second gearcase connected mechanically, with a joint or other equivalent mechanism, to the gearcase of the first row.

3. Harrow with two rows of vertical blades (L1, L2) according to claims 1, 2, **characterised in that** the mechanism for transmitting motion from one gearcase to the other, or the gearcases themselves, are shaped or may be set in such a way that the rotation speed of the blades (L1) in the first row is different, that is, faster or slower, than the rotation speed of the blades (L2) in the second row.

4. Harrow with two rows of vertical blades (L1, L2) according to claims 1, 2, 3, **characterised in that** each disc (D1, D2) is connected to the others so that its blades (L1, L2) turn in the direction opposite to the direction of rotation of the adjacent blades (L1, L2).

5. Harrow with two rows of vertical blades (L1, L2) according to claims 1, 2, 3, 4, **characterised in that** each disc (D1, D2) is connected to the others in such a way that each disc is offset by a quarter of a turn with respect to the adjacent discs (D1, D2).

6. Harrow with two rows of vertical blades (L1, L2) according to claims 1, 2, 3, 4, 5, **characterised in that** the blades (L1) in the front row are shorter than the blades (L2) in the back row.

7. Harrow with two rows of vertical blades (L1, L2) according to claims 1, 2, 3, 4, 5, 6, **characterised in that** it is equipped with a levelling roller (O) located behind and parallel to said two rows of blades (L1, L2).
